# EUROPÄISCHE PATENTSCHRIFT

(11) **EP 3 271 078 B1**
(45) Veröffentlichungstag und Bekanntmachung des Hinweises auf die Patenterteilung: **12.02.2020**
(21) Anmeldenummer: 16711187.1
(22) Anmeldetag: 14.03.2016
(51) Int. Cl.: B05B 3/06, B05B 1/34, B05B 13/06, B08B 9/08, B08B 9/093, F16C 17/10, B05B 1/04, B05B 15/55

(54) **ROTIERENDER REINIGER**
ROTATING CLEANING HEAD
DISPOSITIF DE NETTOYAGE ROTATIF

(30) Priorität: 18.03.2015 DE 102015003559
(43) Veröffentlichungstag der Anmeldung: 24.01.2018
(73) Patentinhaber: GEA Tuchenhagen GmbH, 21514 Büchen (DE)
(72) Erfinder: BECKER, Kai, 21035 Hamburg (DE); COLLINS, Richard, Cradley Herefordshire WR13 5JA (GB)
(74) Vertreter: Eisenführ Speiser
(86) Internationale Anmeldenummer: PCT/EP2016/055427
(87) Internationale Veröffentlichungsnummer: WO 2016/146568

(56) Entgegenhaltungen:
- EP-A1- 1 886 733
- WO-A1-95/32805
- DE-U1-202010 010 979
- JP-A- 2011 173 080
- US-A- 3 021 078

## Beschreibung

Die Erfindung betrifft einen rotierenden Reiniger, mit einem Gehäuse, welches einen Hohlraum und einen mit einer Fluidzuleitung verbindbaren Einlass besitzt, mit einem sich abschnittsweise in den Hohlraum erstreckenden Schaft, mit einem Sprühkörper, welcher einen Innenraum besitzt, welcher Sprühkörper drehfest mit dem Schaft verbunden ist, und welcher wenigstens eine Austrittsöffnung umfasst, und mit einem Lager zur drehbaren Unterstützung des Schafts im Gehäuse.

Rotierende Reiniger sind im Stand der Technik bekannt und werden seit vielen Jahren erfolgreich in der Prozessindustrie eingesetzt. Prozessindustrie meint hier insbesondere die Getränketechnik, Lebensmitteltechnik, Pharmazie und Biochemie.

Die hier betroffenen Reiniger werden genutzt, um Verschmutzungen von den Wandungen eines innenraumes eines Behälters, beispielsweise eines Tanks, zu entfernen. Sie besitzen einen sich drehenden Sprühkörper mit einem oder mehreren Auslässen, aus denen ein Reinigungsfluid austritt. Durch die Drehung des Sprühkörpers wird nach Möglichkeit die gesamte innere Wandfläche des Behälters mit Reinigungsfluid benetzt. Diese Drehung wird durch das durch den Reiniger hindurchströmende Reinigungsfluid erzeugt.

Die Anordnung der Öffnungen an dem Sprühkörper bestimmt zusammen mit der Drehung des Sprühkörpers das Sprühbild des Reinigers, also die Verteilung des ausgetretenen Reinigungsfluids.

Einen ersten Reiniger dieser Art zeigt die GB 1604650 A**.** Ein kugelförmiger Sprühkörper mit einem Innenraum ist an einem hohlen Schaft befestigt. Dieser ist in einem Gehäuse drehbar gelagert, wobei ein axiales Gleitlager und ein radiales Gleitlager zum Einsatz kommen. Eine von Reinigungsfluid angeströmte Kugel, die zwischen einer gehäuseseitigen und drehkörperseitigen Fläche angeordnet ist, versetzt den Sprühkörper in Drehung. Durch den hohlen Schaft gelangt das Reinigungsfluid vom Gehäuse in den Innenraum des Sprühkörpers. Der kugelförmige Sprühkörper besitzt mehrere Öffnungen, aus denen Reinigungsfluid austritt.

Einen weiteren gattungsgemäßen Reiniger stellt die DE 102005015534 B3 vor. Ein Sprühkopf ist mit einem Schaft in einem Gehäuse um eine Längsachse drehbar gelagert. Über einen Kanal im Schaft strömt Reinigungsflüssigkeit in den Sprühkopf. In diesem Kanal ist ein Antriebsteil quer zur Längsachse angeordnet, mit dem der Sprühkopf in Drehung versetzbar ist. Zwischen einem Zufluss und dem Antriebsteil ist ein Strömungslinearisierer angeordnet, der eine Mehrzahl von ringförmig angeordneten und parallel zur Längsachse ausgerichteten Strömungskanälen aufweist. Die Drehung wird dadurch nicht mehr in unerwünschter Weise von Wirbeln in der Reinigungsflüssigkeit beeinflusst. Unterbrechungen der Drehbewegung, die von den Wirbeln ausgelöst werden, werden vermieden. Die Wirkung beruht auf der Verbesserung der Strömung entlang der Längsachse und damit der Drehachse des Reinigers.

Einen anderen Weg zur Verbesserung des Sprühbildes eines rotierenden Reinigers mit einem Sprühstrahl oder mehreren Sprühstrahlen schlägt die DE 102011078857 A1 vor. Der Reiniger besitzt einen Rotor, an dem wenigstens eine Austrittsöffnung vorgesehen ist und der drehbar in einem Gehäuse gelagert ist. Zwischen dem Gehäuse und dem Rotor ist gemäß dem Vorschlag eine Drallkammer vorgesehen. Diese Drallkammer beeinflusst die Strömung der Reinigungsflüssigkeit im Rotor derart, dass die Drehgeschwindigkeit des Rotors stabilisiert wird.

Der Erfindung liegt die Aufgabe zu Grunde, einen rotierenden Reiniger mit einem verbesserten Sprühbild zu schaffen.

Diese Aufgabe wird gelöst mit einem rotierenden Reiniger, der die Merkmale des Anspruchs 1 aufweist. Die abhängigen Ansprüche 2 bis 11 geben vorteilhafte Weiterbildungen des rotierenden Reinigers an.

Der rotierender Reiniger umfasst ein Gehäuse, welches einen Hohlraum und einen mit einer Fluidzuleitung verbindbaren Einlass besitzt, und ein sich abschnittsweise in den Hohlraum erstreckenden Schaft. Ein Sprühkörper ist drehfest mit dem Schaft verbunden, wobei der Sprühkörper einen Innenraum besitzt und wenigstens eine Austrittsöffnung umfasst. Der Schaft ist mit einem Lager drehbar im Gehäuse unterstützt. Im Innenraum des Sprühkörpers ist ein zur gleichmäßigen Verteilung von Fluid gestalteter Fluidverteiler angeordnet. Die vom Fluidverteiler bewirkte Gleichverteilung der Reinigungsflüssigkeit im Innenraum des Sprühkörpers verringert in erheblichem Maß das Auftreten von Wirbeln in der Reinigungsflüssigkeit. Ohne Wirbel tritt das Reinigungsfluid sehr gleichmäßig aus der wenigstens einen Austrittsöffnung aus, wodurch ein besseres Sprühbild geschaffen wird.

Eine weitere Verbesserung der gleichmäßigen Verteilung wird erzielt, indem der Fluidverteiler eine Schafteintrittsöffnung des Innenraums vollständig abdeckt und mehrere zur gleichmäßigen Verteilung von Fluid gestalteten Öffnungen aufweist.

Die Verteilung der Reinigungsflüssigkeit im Sprühkörper wird zusätzlich verbessert, wenn der Fluidverteiler mit dem Sprühkörper mitdrehend angeordnet ist.

Erfindungsgemäß werden zudem die vorgenannten Vorteile vertieft, in dem der Fluidverteiler einen Hohlkörper mit einem Zylinder und einer kuppelartigen Stirnseite umfasst.

Diese Bauform kann weiter verbessert werden, indem der Fluidverteiler eine an einem Maximum der kuppelartigen Stirnseite vorgesehene Ablauföffnung besitzt, die ein Leerlaufen des Fluidverteilers bewirkt. Dies verhindert, dass Reinigungsflüssigkeit oder ein anderes Fluid im Fluidverteiler, insbesondere im kuppelartigen Bereich, bleibt und ist daher besonders hygienisch.

Eine zusätzliche Verbesserung der gleichmäßigen Verteilung der Reinigungsflüssigkeit vor Verlassen des Sprühkörpers durch die Austrittsöffnung wird erreicht, indem die Öffnungen am Fluidverteiler gleichmäßig verteilt sind. Diese Gleichmäßigkeit kann insbesondere durch eine im Bezug zur Drehachse des Reinigers symmetrischen Anordnung der Öffnungen erreicht werden.

Eine weitere Verbesserung des Sprühbilds entsteht, indem eine summierte Durchtrittsfläche der Öffnungen mindestens einer Durchtrittsfläche der Austrittsöffnung oder der summierten Durchtrittsfläche der Austrittsöffnungen entspricht, da auf diese Weise ein Druckverlust in der Reinigungsflüssigkeit zwischen Fluidverteilerung und Austrittsöffnungen vermieden wird.

Vorteilhaft ist es, wenn der Fluidverteiler aus einem rostfreien Edelstahl hergestellt ist. Dies erlaubt eine kostengünstige Herstellung und ist für hygienische Anwendungen besonders geeignet. Ein Fluidverteiler aus Edelstahl zeichnet sich durch sehr gute Medienbeständigkeit und hohe mechanische Stabilität aus.

Eine einfache Art der Lagerung, die eine gleichmäßige Drehung bewirkt und dadurch das Sprühbild verbessert, ist, das Lager zur drehbaren Unterstützung des Schafts als ein Gleitlager auszuführen, welches eine in axialer und radialer Richtung wirkenden Gleitfläche umfasst.

Es ist vorteilhaft, Schnittstellen zwischen Bauteilen zu vermeiden, da sich dort Schmutz festsetzen kann, der entfernt werden muss. Daher ist es vorteilhaft, wenn Schaft und Fluidverteiler einteilig ausgeführt sind.

Die selbstreinigenden Eigenschaften des Reinigers werden verbessert, indem gemäß einer Weiterbildung der Schaft eine am Gehäuse vorgesehene Ausnehmung mit einer Wandfläche durchsetzt, welche Wandfläche zur Umlenkung entlang des Schafts zum Gehäuse strömenden Fluides in Richtung der Sprühkugel gestaltet ist.

Die Wirkweise des Lagers und dadurch Gleichlauf des Sprühkörpers und in der Folge das Sprühbild werden verbessert, indem der Schaft unmittelbar unter einem Lagerkonus eine Zufuhröffnung zur Versorgung des Lagers mit unter Druck stehendem Fluid aufweist. Dieses in den Lager strömende Fluid erzeugt eine Kraft, die der auf den Fluidverteiler durch das in den Reiniger einströmende Fluid entgegengerichtet ist. Diese entgegengesetzten Kräfte verringern die Gesamtkraft, in der Folge sinken die Gleitreibungskräfte.

Anhand eines Ausführungsbeispiels und seiner Weiterbildungen sollen die Erfindung näher erläutert und die Darstellung der Wirkungen und Vorteile vertieft werden.

Es zeigen:
- **Fig. 1:**: Seitlicher Blick auf einen rotierenden Reiniger;
- **Fig. 2:**: Längsschnitt entlang der Linie A-A durch den rotierenden Reiniger;
- **Fig. 3:**: Längsschnitt durch einen Fluidverteiler;
- **Fig. 4:**: Längsschnitt durch einen Fluidverteiler gemäß einer Weiterbildung.

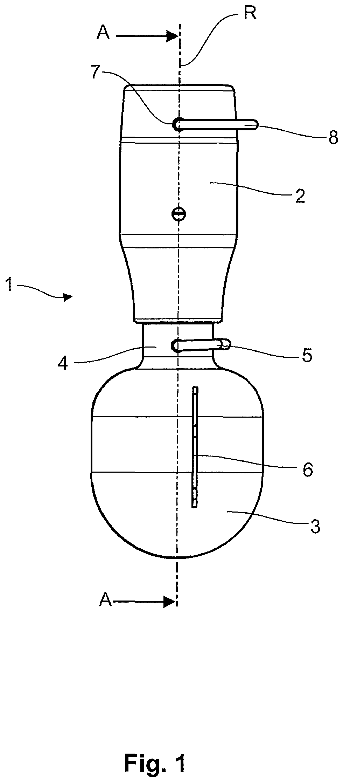

In einem seitlichen Blick ist in **Fig. 1** ein rotierender Reiniger 1 dargestellt. Der rotierende Reiniger 1 besitzt ein Gehäuse 2 und einen drehfähigen Sprühkörper 3. Der Sprühkörper 3 weist einen Hals 4 auf, in welchem ein Schaft aufgenommen ist. Mit einer Klammer 5 ist eine lösbare Verbindung zwischen Hals 4 und Schaft bewirkbar. Das Gehäuse 2 des Reinigers 1 weist ein Stiftloch 7 auf. Dieses ermöglicht es, den Reiniger 1 mit einer nicht gezeigten Zuleitung für Fluide, beispielsweise der Reinigungsflüssigkeit eines Cleaning-In-Place-Prozesses, lösbar zu verbinden. Das Stiftloch 7 kann beispielsweise einen Stift 8 oder eine Klammer aufnehmen. Alternativ kann der Reiniger 1 in einer Schraub- oder Schweißverbindung mit der Zuleitung verbindbar sein.

An dem Sprühkörper 3 ist wenigstens eine Austrittsöffnung für ein Reinigungsfluid vorgesehen. In diesem Beispiel ist die Austrittsöffnung als Schlitz 6 ausgeführt, der längs der Drehachse R verläuft.

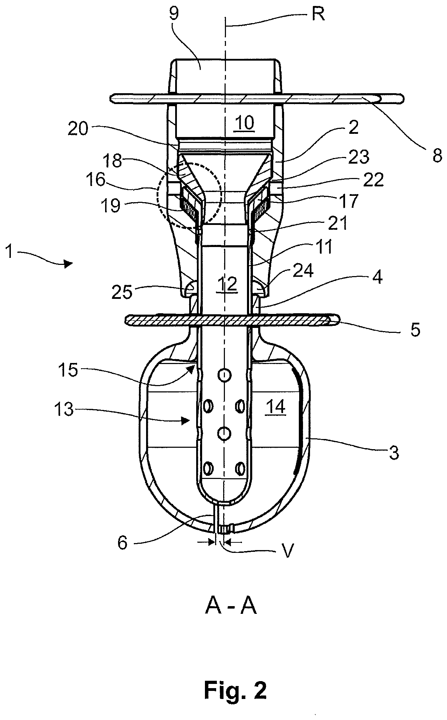

Der rotierende Reiniger 1 ist in einem Schnitt entlang der Linie A-A in **Fig. 2** dargestellt.

Das Gehäuse 2 besitzt einen Einlass 9, der mit einer nicht gezeigten Fluidzuleitung verbindbar ist und den Hohlraum 10 für Fluid zugänglich macht. In dem Hohlraum 10 ist ein Schaft 11 drehbar gelagert. Dieser Schaft 11 weist einen Schaftinnenraum 12 auf, welcher in Fluidverbindung mit dem Hohlraum 10 steht. Der Schaft 11 ragt aus dem Gehäuse 2 heraus und tritt in den Hals 4 des Sprühkörpers 3 ein. Im Reinigungsbetrieb des Reinigers 1 fließt Reinigungsfluid durch den Schaftinnenraum 12 und gelangt durch den Fluidverteiler 13 in einen innenraum 14 des Sprühkörpers 3. Der Fluidverteiler kann zum Erzielen möglichst weniger Wirbel so gestaltet sein, dass er den Schaftinnenraum 12 und eine den Hals 4 durchsetzende Schafteintrittsöffnung 15 vollständig abdeckt.

Der Fluidverteiler 13 ist so gestaltet, dass im Betrieb des Reinigers 1 die Reinigungsflüssigkeit gleichmäßig und unter erheblich reduzierter Wirbelbildung im Innenraum 14 verteilt wird. Durch den Schlitz 6 oder einer Mehrzahl solcher Schlitze tritt die Reinigungsflüssigkeit in Form eines Reinigungsstrahls aus dem Sprühkörper 3 aus. Der Schlitz 6 ist dabei so angeordnet und in der Wandung des Sprühkörpers 6 ausgebildet, dass der Sprühkörper in Drehung versetzt wird. Um dies zu bewirken, ist der Schlitz 6 gegen die Drehachse R um einen Versatz V versetzt, der Schlitz 6 erstreckt sich in der Wandung nicht entlang einer radialen Richtung des Sprühkörpers 3.

Die drehbare Unterstützung des Schafts 11 im Gehäuse 2 erfolgt mit einem Lager 16, das im hier dargestellten Beispiel vorteilhaft als Gleitlager ausgeführt ist.

An einem Ende des Schafts 11, welches dem Einlass 9 zugewandt ist, ist an dem Schaft 11 ein Lagerkonus 17 ausgeformt, dessen Oberfläche Gleitlagereigenschaft besitzt. Der Lagerkonus 17 wirkt mit passend ausgeformten ruhenden Lagerflächen zusammen. Diese können an einer Führungshülse 18 und einem optionaten Zwischenring 19 ausgebildet sein.

Die Führungshülse 18 ragt in den Schaftinnenraum 12 hinein und bewirkt zugleich eine Stabilisierung des Schafts 11 in radialer und axialer Richtung. Die Beweglichkeit der Führungshülse 18 wird durch einen auf einer Innenwand des Gehäuses 2 ausgebildeten Vorsprung 20 in axialer Richtung begrenzt.

Für einen einfachen Zusammenbau und Auseinanderbau des Reinigers 1 sind der Vorsprung 20, die Führungshülse 18, das Gehäuse 2 und der Schaft 11 so ausgeführt, dass zunächst der Schaft 11 in das Gehäuse 2 eingesetzt wird, gegebenenfalls nach Einsetzen des Zwischenrings 19. Anschließend wird die Führungshülse 18 über den Vorsprung 20 geschoben und rastet dann ein.

Die Schmierung des Gleitlagers erfolgt mit Reinigungsfluid, welches durch wenigstens eine im Schaft 11 vorgesehene Zuführöffnung 21 in die Spalte zwischen Führungshülse 18 und Lagerkonus 17, zwischen Lagerkonus 17 und Zwischenring 19 sowie zwischen Zwischenring 19 und Gehäuse 2 eintritt. Das schmierende Reinigungsfluid fließt durch wenigstens eine im Gehäuse eingebrachte Ablauföffnung 22 aus dem Lager 15 ab. Die Zufuhröffnung 21 versorgt das Lager 15 mit unter Druck stehendem Reinigungsfluid. Dieses in den Lager 15 strömende Reinigungsfluid erzeugt eine Kraft, die der auf den Fluidverteiler durch das in den Reiniger 1 einströmende Reinigungsfluid entgegengerichtet ist. Während das in den Reiniger 1 einströmende Reinigungsfluid eine Kraft entlang der Drehachse in Fig. 2 nach unten erzeugt, wird durch den Druck in den zuvor beschriebenen Spalten des Lagers 15 eine Kraft in Fig. 2 nach oben erzeugt. Diese entgegengesetzten Kräfte verringern die auf die Lagerflächen einwirkende Gesamtkraft, in der Folge sinken die Gleitreibungskräfte. Die Wirkweise des Lagers 15, der Gleichlauf des Sprühkörpers 3 und in der Folge das Sprühbild des Reinigers 1 werden verbessert.

Diese Wirkung kann zusätzlich verbessert werden, indem ein Auflagevorsprung 23 im Gehäuse 2 ausgeformt ist, der eine Bewegung der Führungshülse 18 in Richtung des Sprühkörpers 3 begrenzt, in dem sich die Führungshülse 18 auf eine beispielsweise konisch gestaltete Fläche des Auflagevorsprungs 23 aufsetzt. Die Führungshülse 18 ist dann von Vorsprung 20 und Auflagevorsprung 23 mit Spiel gefasst.

Durch die konische Gestaltung der Lagerflächen am Schaft 11, der Führungshülse 18 und des Zwischenrings 19 ist ein Lager 16 gebildet, das mit einem Satz zusammenhängender Flächen eine gleichzeitige radiale und axiale Lagerung bewirkt. Ein solches als Schräglager wirkendes Lager 16 verbessert den Lauf des Sprühkörpers 3 durch verbesserte Zentrierung. Die Herstellung ist aufgrund der geringeren Anzahl genau zu fertigender Flächen vereinfacht. Gegenüber dem Stand der Technik ist daher eine höhere Genauigkeit des Lagers 16 leichter erzielbar. Die höhere Genauigkeit verbessert ebenfalls die Lauf- bzw. Dreheigenschaften und damit das Sprühbild. Durch die geringere Anzahl von Komponenten und einfachere Geometrie ist der Reiniger 1 besser zu reinigen und weniger anfällig gegen Verschmutzung, so dass es einfacher ist, die geltenden Standards nach 3A und EHEDG zu erfüllen.

Vorteilhaft ist der Fluidverteiler 13 aus einem einem rostfreien Edelstahl hergestellt, vorteilhafte Beispiele sind 316L und 318S13 nach Norm des AISI (American Iron and Steel Institute) und Edelstähle mit den Werkstoffnummern 1.4404 und 1.4440 nach der Europäischen Norm EN 10027-2. Edelstähle mit den Eigenschaften dieser genannten Beispiele können eingesetzt werden, wobei die nicht-rostende Eigenschaft, also eine hohe Korrosionsbeständigkeit und Widerstandsfähigkeit gegen chlorhaltige Medien, und die maschinelle Bearbeitbarkeit sowie die eingangs genannten Anwendungsfelder des Reinigers bei der Wahl von Bedeutung sind. Ein Fluidverteiler 13 aus Edelstahl zeichnet sich durch sehr gute Medienbeständigkeit und hohe mechanische Stabilität aus.

In anderer Weise sind diese Standards einfach zu erfüllen, wenn der Schaft 11 aus Polyetheretherketon (PEEK) oder einem Kunststoff mit vergleichbaren Eigenschaften hergestellt ist. Insbesondere PEEK bietet sehr gute Gleitlagereigenschaften, beispielsweise im Zusammenwirken mit Edelstahl, welches dann für das Gehäuse 2 eingesetzt wird. Ein Fluidverteiler1 3 aus PEEK wirkt daher mit der entsprechenden Weiterbildung besonders vorteilhaft zusammen. Er erlaubt zudem den Verzicht auf den Zwischenring 19, der bei einem Fluidverteiler 13 aus Edelstahl und einem Gehäuse aus Edelstahl notwendig ist, um eine gleitlagerfähige Materialpaarung zu schaffen.

Der Schaft 11 durchsetzt eine Ausnehmung 24 am Gehäuse 2, die an einer dem Einlass 9 gegenüberliegenden Stirnseite des Gehäuses 2 angeordnet ist. Die Ausnehmung 24 besitzt eine Wandfläche 25, welche gewölbt geformt ist, so dass die Ausnehmung 24 zur Umlenkung entlang des Schafts zum Gehäuse strömenden Fluides in Richtung der Sprühkugel gestaltet ist. Der Schnitt nach Fig. 2 durch die Wandfläche 25 ergibt eine gerundete Kontur. Diese Formgebung führt zu einer vorteilhaften Wirkung der Ausnehmung 24 auf die Selbstreinigung des Reinigers 1. Reinigungsflüssigkeit kann durch den Spalt, der sich fertigungsbedingt zwischen einer Außenwand des Schafts 11 und der Innenwand einer Bohrung im Hals 4 ergibt, aus dem Sprühkörper 3 entlang des Schafts 11 in Richtung des Gehäuses 2 austreten. Diese Flüssigkeit steht unter Druck und strömt in die Ausnehmung 24. Durch die gewölbte Form der Wandfläche 25 wird sie umgelenkt und bildet einen Reinigungsstrahl, der auf eine äußere Oberfläche von Sprühkörper 3 und Hals 4 trifft und dort reinigend wirkt. Die Ausnehmung 24 wirkt in einem rotierenden Reiniger 1 auch ohne Vorhandensein eines Fluidverteilers 13. Der Fluidverteiler 13 bewirkt jedoch eine gleichmäßigere Spaltströmung zwischen Fluidverteiler 13 und Sprühkörper 3 entlang des Halses 4, wodurch er die Reinigungswirkung des an der Ausnehmung 24 umgelenkten Fluides verbessert.

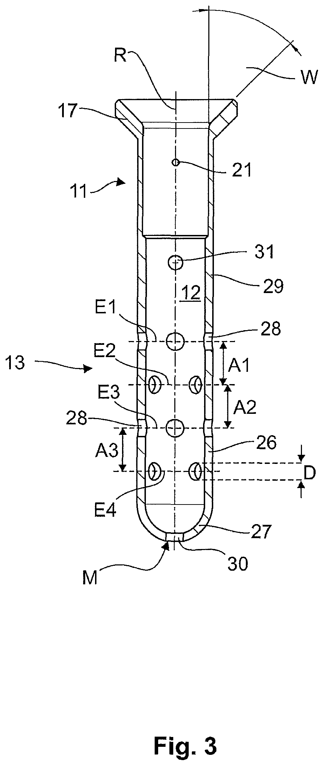

Der Fluidverteiler 13 ist in **Fig. 3** im Detail entlang der Drehachse R geschnitten dargestellt.

Der Fluidverteiler 13 ist als Hohlkörper ausgebildet. Der Hohlkörper umfasst einen Zylinder 26 und eine kuppefartige Stirnseite 27. Mehrere Öffnungen 28 durchsetzen die Wandung 29 des Fluidverteilers 13.

Eine gerade Anzahl von Öffnungen 28 befindet sich am Zylinder 26. Sie sind im gezeigten Beispiel in vier Ebenen E1, E2, E3 und E4 angeordnet. In jeder Ebene sind Öffnungen 28 auf einem Umfang des Zylinders in gleichem Abstand zueinander verteilt. Bei vier Öffnungen 28 in einer Ebene E1, E2, E3 oder E4 ist alle 90° entlang des Umfangs eine Öffnung 28 vorgesehen. Die Ebene E1 befindet sich in einem Abstand A1 zur Ebene E2. Zwischen den Ebenen E2 und E3 ist ein Abstand A2 vorgesehen. Die Ebenen E3 und E4 sind in einem Abstand A3 zueinander angeordnet. Die Abstände A1, A2 und A3 entsprechen sich vorteilhaft bis auf wenige Prozent Abweichung, vorzugsweise einstellige Werte. Diese Anordnung der Öffnungen 28 innerhalb der Ebenen und der Ebenen E1, E2, E3 und E4 zueinander entspricht einer gleichmäßigen Verteilung der Öffnungen. Diese durch Symmetrie gleichmäßige Verteilung ist vorteilhaft, um Wirbel innerhalb des Innenraums 14 des Sprühkörpers 3 sehr stark zu reduzieren und dadurch Drehung des Sprühkörpers 3 sowie den Sprühstrahl und damit das Sprühbild zu verbessern. Die Anzahl der Öffnungen 28 in einer Ebene E1, E2, E3 und E4 und die Anzahl der Ebenen E1, E2, E3 und E4 können angepasst werden, um die beschriebenen Wirkungen zu erreichen. Dies kann beispielsweise bei unterschiedlichen Baugrößen des rotierenden Reinigers 1 notwendig sein.

Der Reiniger 1 kann in dem zu reinigenden Behälter so montiert sein, dass die Drehachse R etwa in Richtung der Schwerkraft zeigt. Daher weist die kuppelartige Stirnseite 27 an ihrem Maximum M, das in dieser Einbaulage dem bezogen auf die Schwerkraft tiefsten Punkt entspricht, eine Ablauföffnung 30 auf. Auf diese Weise ist ein Leerlaufen der Fluidverteilers 13 in der bestimmungsgemäßen Einbaulage gegeben, so dass kein Flüssigkeitsrest in ihm stehen bleibt.

Im Hinblick auf die Verwendung des Reinigers 1 in Einsatzfeldern, in denen Standards nach EHEDG und 3A entsprochen werden müssen, ist es zweckmäßig, die Öffnungen 28 mit einem Durchmesser D auszuführen, der mindestens 3,2mm beträgt. Die Ablauföffnung 30 kann ebenfalls diesen Durchmesser D besitzen.

Die Anzahl der Öffnungen 28, deren Durchmesser D sowie der Durchmesser der gegebenenfalls vorgesehenen Ablauföffnung 30 ergeben eine Gesamtfläche, durch die Fluid aus dem Schaftinnenraum 12 in den Innenraum 14 des Sprühkörpers 3 überströmen kann. Diese Gesamtfläche ist durch Wahl von Anzahl der Öffnungen 28 und Durchmesser D so bemessen, dass sie mindestens derjenigen Fläche entspricht, durch die Fluid aus dem Sprühkörper 3 ausströmen kann. Fluid tritt aus dem Sprühkörper insbesondere aus der Austrittsöffnung 6 oder der Mehrzahl der Austrittsöffnungen 6 aus. Zusätzlich kann Fluid durch den Spalt zwischen Hals 4 und Schaft 11 fließen. Vorteilhaft wird diese Spaltströmung bei der Bemessung der summierten Durchtrittsfläche am Fluidverteiler 13 berücksichtigt, insbesondere, wenn diese Spaltströmung zur Selbstreinigung des Reinigers 1 gezielt genutzt wird.

Eine einfachere Montage, günstige Herstellung und ein Verzicht auf Bauteilschnittstellen entstehen durch die einteilige Ausführung von Schaft 11 und Fluidverteiler 13. Der Zylinder 26 geht hierzu nahtlos in den Schaft 11 über.

Am Schaft 11 ist der Lagerkonus 17 ausgeformt und befindet sich an dem Ende des Schafts, der dem Zylinder 26 in Richtung der Drehachse R gegenüberliegt. Der Winkel W des Lagerkonus 17 ist der Funktion des kombinierten Lagers 16 angepasst, welches zur gleichzeitigen drehbaren Unterstützung in axialer und radialer Richtung gestaltet ist. Der Winkel kann 30 Grad bis 60 Grad betragen, vorteilhaft liegt er bei 45 Grad mit 5 Grad Abweichung in jeder Richtung.

Das Bauelement mit Schaft 11 und Fluidverteiler 13 besitzt ein Klammerloch 31 zur Aufnahme der Klammer 5. Wie zu Fig. 1 erläutert bewirkt die Klammer 5 eine lösbare Verbindung zwischen dem Hals 4 des Sprühkörpers 3 und dem Schaft 11. Durch diese Bauweise wird bewirkt, dass sich der Fluidverteiler 3 mit dem Sprühkörper 3 dreht. Das Mitdrehen reduziert zusätzlich die Wirbelbildung im Sprühkörper 3.

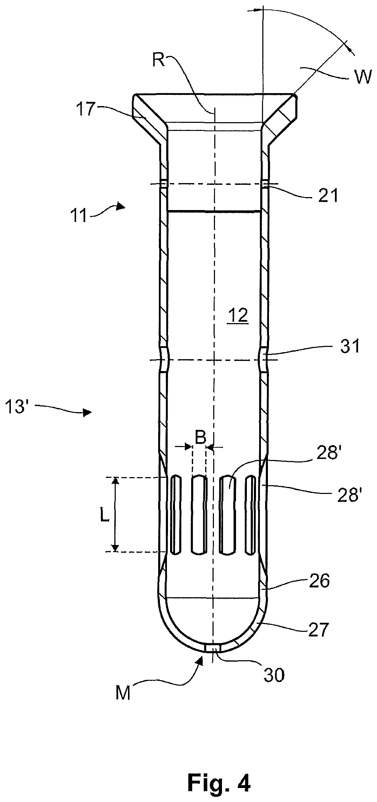

In Fig. 4 ist ein Fluidverteiler 13' in einer weitergebildeten Form gezeigt, wobei sich die Weiterbildung auf die Gestaltung der Öffnung 28' bezieht. In diesem Beispiel sind mehrere Öffnungen 28' als Schlitze ausgeführt, die beispielsweise durch Sägen geschaffen sind. Jede schlitzförmige Öffnung 28' besitzt eine lange Achse L und eine Breite B, aus deren Maß sich die Durchtrittsfläche ergibt. Zusammen mit der Anzahl der schlitzartigen Öffnungen und gegebenenfalls weiterer Öffnungen mit anderer Form ergibt sich die Gesamtfläche, durch die Reinigungsfluid vom Schaftinnenraum 12 kommend aus dem Fluidverteiler 13' in den Innenraum 14 treten kann. Diese Gesamtfläche ist wie im ersten Beispiel einer Fluidverteilers 13 so bemessen, dass sie mindestens derjenigen Fläche entspricht, durch die Fluid aus dem Sprühkörper 3 ausströmen kann. Hierdurch wird die Stauung und Verwirbelung des Fluids erheblich verringert.

Vorteilhaft sind wie in **Fig. 4** dargestellt mehrere schlitzförmige Öffnungen 28' regelmäßig über den Umfang verteilt. Diese Öffnungen wirken mit der Ablauföffnung 30 am Maximum M der kuppelartigen Stirnseite 27 zusammen.

### Bezugszeichenliste

- 1: rotierender Reiniger
- 2: Gehäuse
- 3: Sprühkörper
- 4: Hals
- 5: Klammer
- 6: Austrittsöffnung
- 7: Stiftloch
- 8: Stift
- 9: Einlass
- 10: Hohlraum
- 11: Schaft
- 12: Schaftinnenraum
- 13, 13': Fluidverteiler
- 14: Innenraum
- 15: Schafteintrittsöffnung
- 16: Lager
- 17: Lagerkonus
- 18: Führungshülse
- 19: Zwischenring
- 20: Vorsprung
- 21: Zuführöffnung
- 22: Ablauföffnung
- 23: Auflagevorsprung
- 24: Ausnehmung
- 25: Wandfläche
- 26: Zylinder
- 27: kuppelartige Stirnseite
- 28, 28': Öffnung
- 29: Wandung
- 30: Ablauföffnung
- 31: Klammerloch
- B: Breite
- L: Länge
- R: Drehachse
- V: Versatz
- M: Maximum
- W: Winkel
- E1: erste Ebene der Öffnungen
- E2: zweite Ebene der Öffnungen
- E3: dritte Ebene der Öffnungen
- E4: vierte Ebene der Öffnungen
- D: Durchmesser einer Öffnung
- A1: Abstand zwischen E1 und E2
- A2: Abstand zwischen E2 und E3
- A3: Abstand zwischen E3 und E4

## Patentansprüche

1. Rotierender Reiniger (1) mit einem Gehäuse (2), welches einen Hohlraum (10) und einen mit einer Fluidzuleitung verbindbaren Einlass (9) besitzt, mit einem sich abschnittsweise in den Hohlraum (10) erstreckenden Schaft (11), mit einem Sprühkörper (3), welcher einen Innenraum (14) besitzt, welcher Sprühkörper (3) drehfest mit dem Schaft (11) verbunden ist, und welcher Wenigstens eine Austrittsöffnung (6) umfasst, und mit einem Lager (16) zur drehbaren Unterstützung des Schafts (11) im Gehäuse (2), wobei im Innenraum (14) ein zur gleichmäßigen Verteilung von Fluid gestalteter Fluidverteiler (13; 13') angeordnet ist, wobei der Fluidverteiler (13; 13') einen Hohlkörper mit einem Zylinder (26) und einer kuppelartigen Stirnseite (27) umfasst.

2. Rotierender Reiniger nach Anspruch 1, **dadurch gekennzeichnet, dass** der Fluidverteiler (13; 13') eine Schafteintrittsöffnung (15) des Innenraums vollständig abdeckt und mehrere zur gleichmäßigen Verteilung von Fluid gestaltete Öffnungen (28; 28') aufweist.

3. Rotierender Reiniger nach Anspruch 1 oder 2, **dadurch gekennzeichnet, dass** der Fluidverteiler (13; 13') mit dem Sprühkörper (3) mitdrehend angeordnet ist.

4. Rotierender Reiniger nach Anspruch 1, **dadurch gekennzeichnet, dass** der Fluidverteiler (13) eine an einem Maximum (M) der kuppelartigen Stirnseite (27) vorgesehene Ablauföffnung (30) besitzt, die ein Leerlaufen des Fluidverteilers (13; 13') bewirkt.

5. Rotierender Reiniger nach Anspruch 2 oder nach Anspruch 3 wenn abhängig vom Anspruch 2, **dadurch gekennzeichnet, dass** die Öffnungen (28; 28') am Fluidverteiler (13; 13') gleichmäßig verteilt sind.

6. Rotierender Reiniger nach Anspruch 2 oder nach Anspruch 5 oder nach Anspruch 3 wenn abhängig vom Anspruch 2, **dadurch gekennzeichnet, dass** eine summierte Durchtrittsfläche der Öffnungen (28; 28') mindestens einer summierten Durchtrittsfläche der Austrittsöffnungen (6) entspricht.

7. Rotierender Reiniger nach einem der vorhergehenden Ansprüche, **dadurch gekennzeichnet, dass** der Fluidverteiler (13; 13') aus einem rostfreien Edelstahl hergestellt ist.

8. Rotierender Reiniger nach einem der vorhergehenden Ansprüche, **dadurch gekennzeichnet, dass** das Lager (16) zur drehbaren Unterstützung des Schafts (11) ein Gleitlager mit einer in axialer und radialer Richtung wirkenden Gleitfläche umfasst.

9. Rotierender Reiniger nach einem der vorhergehenden Ansprüche, **dadurch gekennzeichnet, dass** Schaft (11) und Fluidverteiler (13; 13') einteilig ausgeführt sind.

10. Rotierender Reiniger nach einem der vorhergehenden Ansprüche, **dadurch gekennzeichnet, dass** der Schaft (11) eine am Gehäuse (2) vorgesehene Ausnehmung (24) mit einer Wandfläche (25) durchsetzt, welche Wandfläche (25) zur Umlenkung entlang des Schafts (11) zum Gehäuse (2) strömenden Fluides in Richtung des Sprühkörpers (3) gestaltet ist.

11. Rotierender Reiniger nach einem der vorhergehenden Ansprüche, **dadurch gekennzeichnet, dass** der Schaft (11) unmittelbar unter einem Lagerkonus (17) eine Zufuhröffnung (21) zur Versorgung des Lagers (16) mit unter Druck stehendem Fluid aufweist.

## Claims

1. Rotating cleaner (1) comprising a housing (2) which has a cavity (10) and an inlet (9) which can be connected to a fluid supply line, comprising a shaft (11) extending in sections into the cavity (10), comprising a spray body (3) which has an interior space (14), which spray body (3) is connected to the shaft (11) for conjoint rotation therewith and includes at least one outlet opening (6), and comprising a bearing (16) for rotatably supporting the shaft (11) in the housing (2), wherein a fluid manifold (13; 13') configured for uniform distribution of fluid is arranged in the interior space (14), wherein the fluid manifold (13; 13') comprises a hollow body having a cylinder (26) and a dome-shaped end face (27).

2. Rotating cleaner as claimed in claim 1, **characterised in that** the fluid manifold (13; 13') completely covers a shaft inlet opening (15) of the interior space and has a plurality of openings (28; 28') configured for uniform distribution of fluid.

3. Rotating cleaner as claimed in claim 1 or 2, **characterised in that** the fluid manifold (13; 13') is arranged so as to co-rotate with the spray body (3).

4. Rotating cleaner as claimed in claim 1, **characterised in that** the fluid manifold (13) has a discharge opening (30) which is provided at a maximum (M) of the dome-shaped end face (27) and which causes the fluid manifold (13; 13') to empty.

5. Rotating cleaner as claimed in claim 2 or as claimed in claim 3 when dependent on claim 2, **characterised in that** the openings (28; 28') are uniformly distributed on the fluid manifold (13; 13').

6. Rotating cleaner as claimed in claim 2 or as claimed in claim 5 or as claimed in claim 3 when dependent on claim 2, **characterised in that** a summated pass-through surface of the openings (28; 28') corresponds at least to a summated pass-through surface of the outlet openings (6).

7. Rotating cleaner as claimed in any one of the preceding claims, **characterised in that** the fluid manifold (13; 13') is produced from a stainless steel.

8. Rotating cleaner as claimed in any one of the preceding claims, **characterised in that** the bearing (16) for rotatably supporting the shaft (11) comprises a sliding bearing having a slide surface acting in the axial and radial direction.

9. Rotating cleaner as claimed in any one of the preceding claims, **characterised in that** the shaft (11) and the fluid manifold (13; 13') are formed as one piece.

10. Rotating cleaner as claimed in any one of the preceding claims, **characterised in that** the shaft (11) passes through an aperture (24) which is provided on the housing (2) and has a wall surface (25), which wall surface (25) is configured to deflect fluid - which is flowing along the shaft (11) to the housing (2) - in the direction of the spray body (3).

11. Rotating cleaner as claimed in any one of the preceding claims, **characterised in that** directly underneath a bearing cone (17), the shaft (11) has a feed opening (21) for supplying the bearing (16) with pressurised fluid.

## Revendications

1. Dispositif de nettoyage rotatif (1) avec un boîtier (2), lequel dispose d'une cavité (10) et d'une entrée (9) pouvant être reliée à une amenée de fluide, avec une tige (11) s'étendant par section dans la cavité (10), avec un corps de pulvérisation (3), lequel dispose d'un espace intérieur (14), lequel corps de pulvérisation (3) est relié solidaire en rotation à la tige (11), et lequel comprend au moins une ouverture de sortie (6), et avec un palier (16) pour le soutien rotatif de la tige (11) dans le boîtier (2), dans lequel un distributeur de fluide (13 ; 13') conçu pour la distribution uniforme de fluide est agencé dans l'espace intérieur (14), dans lequel le distributeur de fluide (13 ; 13') comprend un corps creux avec un cylindre (26) et un côté frontal de type coupole (27).

2. Dispositif de nettoyage rotatif selon la revendication 1, **caractérisé en ce que** le distributeur de fluide (13 ; 13') recouvre complètement une ouverture d'entrée de tige (15) de l'espace intérieur et présente plusieurs ouvertures (28 ; 28') conçues pour la distribution uniforme de fluide.

3. Dispositif de nettoyage rotatif selon la revendication 1 ou 2, **caractérisé en ce que** le distributeur de fluide (13 ; 13') est agencé en rotation conjointe avec le corps de pulvérisation (3).

4. Dispositif de nettoyage rotatif selon la revendication 1, **caractérisé en ce que** le distributeur de fluide (13) dispose d'une ouverture d'évacuation (30) prévue au niveau d'un maximum (M) du côté frontal de type coupole (27), qui provoque un vidage du distributeur de fluide (13 ; 13').

5. Dispositif de nettoyage rotatif selon la revendication 2 ou selon la revendication 3 lorsque dépendante de la revendication 2, **caractérisé en ce que** les ouvertures (28 ; 28') sont distribuées uniformément sur le distributeur de fluide (13 ; 13').

6. Dispositif de nettoyage rotatif selon la revendication 2 ou selon la revendication 5 ou selon la revendication 3 lorsque dépendante de la revendication 2, **caractérisé en ce qu'**une somme des surfaces de passage des ouvertures (28 ; 28') correspond au moins à une somme des surfaces de passage des ouvertures de sortie (6).

7. Dispositif de nettoyage rotatif selon l'une quelconque des revendications précédentes, **caractérisé en ce que** le distributeur de fluide (13 ; 13') est fabriqué en un acier inoxydable.

8. Dispositif de nettoyage rotatif selon l'une quelconque des revendications précédentes, **caractérisé en ce que** le palier (16) comprend pour le soutien rotatif de la tige (11) un palier lisse avec une surface de glissement agissant dans la direction axiale et radiale.

9. Dispositif de nettoyage rotatif selon l'une quelconque des revendications précédentes, **caractérisé en ce que** la tige (11) et le distributeur de fluide (13 ; 13') sont réalisés d'une seule pièce.

10. Dispositif de nettoyage rotatif selon l'une quelconque des revendications précédentes, **caractérisé en ce que** la tige (11) traverse un évidement (24) prévu au niveau du boîtier (2) avec une surface de paroi (25), laquelle surface de paroi (25) est conçue pour la déviation de fluide s'écoulant le long de la tige (11) vers le boîtier (2) en direction du corps de pulvérisation (3).

11. Dispositif de nettoyage rotatif selon l'une quelconque des revendications précédentes, **caractérisé en ce que** la tige (11) présente directement sous un cône de palier (17) une ouverture d'amenée (21) pour l'alimentation du palier (16) en fluide sous pression.
